**Europäisches Patentamt**

**European Patent Office**

**Office européen des brevets**

(11) Veröffentlichungsnummer: **0 460 513 A1**

## (12) EUROPÄISCHE PATENTANMELDUNG

(21) Anmeldenummer: **91108746.8**

(22) Anmeldetag: **28.05.91**

(51) Int. Cl.5: **F16D 23/06**, F16D 23/04

(30) Priorität: **28.05.90 DE 4017142**

(43) Veröffentlichungstag der Anmeldung:
**11.12.91 Patentblatt 91/50**

(84) Benannte Vertragsstaaten:
**AT DE FR GB IT**

(71) Anmelder: **Klöckner-Humboldt-Deutz Aktiengesellschaft**
**Deutz-Mülheimer-Strasse 111 Postfach 80 05 09**
**W-5000 Köln 80(DE)**

(72) Erfinder: **Komp, Hermann-Josef**
**Isidor-Carostrasse 23**
**W-5000 Köln 80(DE)**
Erfinder: **Engels, Dieter**
**Ostmerheimer Strasse 574**
**W-5000 Köln 91(DE)**

(54) **Synchronisiereinrichtung für Zahnradwechselgetriebe.**

(57) In einer Synchronisiereinrichtung für eine formschlüssige Schaltstelle in Zahnradwechselgetrieben, wird der Kegelsitz (9) durch eine Bohrung (11) mit Schmieröl versorgt.

Zur Erreichung einer verbesserten Ölverteilung im Kegelsitz (9) ist erfindungsgemäß vorgesehen, daß die Bohrung (11) in eine Schmieröltasche (12) mündet, welche sich über die gesamte axiale Breite des Kegelsitzes (9) erstreckt.

Fig.1

EP 0 460 513 A1

Die Erfindung bezieht sich auf eine Synchronisiereinrichtung gemäß dem Oberbegriff von Anspruch 1.

Synchronisiereinrichtungen dienen in Wechselgetrieben für Fahrzeuge, insbesondere Traktorgetriebe, zur Angleichung der Umfangsgeschwindigkeit. Heute für Traktoren vorgesehene synchronisierte Schaltungen weisen fast ausschließlich eine zwangsweise Sperrwirkung auf. Durch die im Vergleich zu anderen Fahrzeuggetrieben beim Traktor oft höhere Beanspruchung der Synchronisation wird versucht, durch eine gezielte Druckölschmierung die Standzeit der Synchroneinrichtung zu verbessern. Das der Synchronisierung zugeführte Druköl dient neben einer Wärmeabfuhr ebenfalls zur Verbesserung der Schmierung und zur Verschleißminderung.

Aus der Getriebebaureihe T 30 50 der Zahnradfabrik Friedrichshafen ist die Schmierung einer Synchronisiereinrichtung zu entnehmen, bei der Drucköl durch eine Zentralbohrung der Getriebewelle zugeführt wird und über davon rechtwinklig abzweigende Bohrungen das Drucköl in eine Ringnut des Schaltmuffenträgers geleitet wird und über Verbindungsbohrungen in zwei Ringräume gelangt, die jeweils einem Kupplungsring zugeordnet sind. Durch Stichbohrungen wird das Öl in den Reibkonus, d. h. zwischen Gleichlauf- und Kupplungsring geführt. Diese bekannte Einrichtung gewährleistet nicht, daß der Reibkonus über seine gesamte Fläche mit einem Schmiermittel beaufschlagt wird, da bedingt durch die Umfangsgeschwindigkeit das in den Reibkonus gelangte Schmiermittel durch die Zentrifugalkraft im Reibkonus nach außen drängt, d. h. zum Größtdurchmesser des Reibkonus. Damit wird bei dieser bekannten Schmiereinrichtung nachteilig ein Großteil des Reibkonus -der Reibkonusabschnitt von der Stichbohrung bis zum Konusende mit dem kleinsten Durchmesser- nicht mit Schmieröl beaufschlagt, mit der Folge, daß dieser Bereich einem erhöhten Verschleiß unterworfen ist und es zu einem Ausfall der Synchronisiereinrichtung kommt.

Daher ist es Aufgabe der Erfindung, eine Synchronisiereinrichtung zu gestalten, bei der mit einfachen Mitteln die Standzeit des Reibkonus und damit die Anzahl der möglichen Schaltvorgänge deutlich erhöht wird ohne Minderung des Schaltkomforts.

Die Aufgabe wird erfindungsgemäß mit den Merkmalen im Kennzeichen von Anspruch 1 gelöst.

Durch die erfindungsgemäße Zuführung eines Schmier- und Kühlmittels, bei der das Mittel durch eine Bohrung, welche unmittelbar in eine Schmieröltasche mündet, in den Reibkonus geleitet wird, ist vorteilhaft eine größere Fläche des Reibkonus beaufschlagbar. Erfindungsgemäß ist vorgesehen, die Ausnehmung im Kupplungsring einzubringen, so daß das durch die Bohrung zugeführte Schmiermittel direkt in die Schmieröltasche gelangt und damit für eine Intensivierung der Kühlung und Schmierung im Reibkonus sorgt durch eine ausgeglichende Öl verteilung. Durch die Erfindung wird während der Synchronisierung, d. h. bis zur Übereinstimmung der Umfangsgeschwindigkeit von Gleichlauf- und Kupplungsring, dem Reibkonus im Mündungsbereich der Bohrung über die gesamte Breite das Schmieröl zugeführt, so daß sich ein geschlossener Schmierfilm aufbaut, der den Verschleiß des Reibkonus mindert und gleichzeitig eine verbesserte der Kühlung zur Folge hat.

Vorteilhaft bewirkt die Erfindung eine effektive Schmierfilmbildung der hochbeanspruchten Reibfläche zwischen dem Gleichlauf- und dem Kupplungsring. Die sich über die gesamte Reibkonusbreite erstreckende Schmieröltasche hat durch das darin befindliche Schmiermittel zur Folge, daß sich ein geschlossener Schmierfilm im Reibkonus bildet, der die Trockenreibung und den damit verbundenen hohen Verschleiß verhindert.

Zur Optimierung der Schmierfilmbildung sieht die Erfindung vor, die Schmieröltasche in Form einer Anflächung im Bereich der Bohrungsmündung für die Schmierölzuführung darzustellen. Diese Gestaltung der Schmiertasche besitzt im Unterschied zu einer rund bzw. halbrund ausgeführten Schmieröltasche den Vorteil, daß die Übergänge zu den Reibflächen des Reibkonus flacher verlaufen mit dem Vorteil einer optimalen Schmierfilmbildung. Zur weiteren Verbesserung bietet sich an, die Übergänge anzufasen bzw. anzuschleifen, damit es nicht zu einem Abriß des Schmierfilms kommen kann. Um der Fliehkraftwirkung des Schmier- bzw. Kühlmittels entgegenzuwirken, ist gemäß der Erfindung die Schmieröltasche vorteilhaft umgekehrt zur Steigung des Reibkonus verjüngt und stellt in der Draufsicht die geometrische Form eines Trapez dar, wobei die größte Grundlinie zum Schaltmuffenträger hin zeigt. Die weitere Gestaltung der Schmieröltasche sieht einen parallelen Verlauf zur Außenkontur des Kupplungsringes im Bereich des Kegelsitzes vor. Alternativ bietet es sich auch an, die Schmieröltasche geneigt zur Außenkontur anzuordnen, wobei der Neigungswinkel entgegengesetzt zum Konus des Kegelsitzes verläuft. Durch diese Schmieröltaschengestaltung ist sichergestellt, daß im Bereich der geringsten Umfangsgeschwindigkeit des Reibkonus aufgrund der größten Breite der Schmiertasche genügend Schmiermittel gelangt, so daß die gewünschte Schmierfilmbildung auch am Reibkonusende sichergestellt ist.

In einer Ausgestaltung der Erfindung ist vorgesehen, daß die im Kupplungsring eingebrachte Bohrung für die Zuführung des Schmier- und Kühlmittels in die Schmiertasche schräg angeordnet ist und von der Winkellage her übereinstimmt mit einer Zuführbohrung, die im Schaltmuffenträger eingebracht ist und von einer Ringnut ausgeht, die in Mitte des Schaltmuffenträgers unmittelbar auf der Getriebwelle angeordnet ist.

Durch Versuche konnte ein optimales Breitenverhältnis für das in einer Trapezform gebildeten Schmieröltasche bestimmt werden, das einem Verhältnis von 2,5 : 1 entspricht, d. h. die zum Schaltmuffenträger zeigende Seite der Schmieröltasche besitzt eine Breite, die dem 2,5-fachen Wert der gegenüberliegenden Seite entspricht.

Eine vorteilhafte Ausgestaltung der Erfindung sieht vor, daß die Bohrung sowie die Zuführbohrung symmetrisch im Kupplungsring bzw. im Muffenträger im jeweiligen Abstand von 90° eingebracht sind und beide Bohrungen in einem Neigungswinkel von 25° zur Mittenachse des Schaltmuffenträgers angeordnet sind.

Zur Erhöhung des Durchsatzes von Schmier- bzw. Kühlmittel durch den Reibkonus ist erfindungsgemäß weiter auch eine größere Anzahl von Bohrungen sowie von Schmieröltaschen in den entsprechenden Bauteilen der Synchronisiereinrichtung möglich. Ebenso kann auch die Anzahl der Bohrungen im Vergleich zu den Zuführbohrungen abweichend sein.

Zur weiteren Verbesserung der Kühlung des Reibkonus ist erfindungsgemäß vorgesehen, am Kupplungsring vertikal angeordnete Ausnehmungen anzubringen, die in Richtung des Schaltmuffenträgers offen sind und in einen Ringraum münden, der im Betriebszustand durch die Zuführbohrungen mit einem Schmier- bzw. Kühlmittel gefüllt ist und damit die durch die Reibungswärme thermisch am höchsten belasteten Bauteile -den Gleichlauf- und Kupplungsring- zusätzlich kühlen kann. Als Nebeneffekt wird weiter der Reibkonus im Bereich seiner geringsten Umfangsgeschwindigkeit über die Ausnehmungen durch das Schmiermittel beaufschlagt, wodurch sich der Schmiereffekt des Reibkonus auch verbessert. Konstruktiv ist dazu vorgesehen, daß die Ausnehmungen mit einem Versatz von 45° zu den Bohrungen im Kupplungsring eingebracht sind.

Der Verschleiß des Reibbelags am Reibkonus ist weiter zu verringern durch die Verwendung eines Streusinterbelages in Form einer Folie, die einflächig aufgetragen wird, vorteilhaft auf dem Gleichlaufring. Die Streusinterfolie bewirkt ein konstantes Reibverhalten bei günstigem Reibwertverlauf, kein "Fressen", eine höchstmögliche Belastbarkeit bei optimaler Ölverträglichkeit.

Zur Darstellung eines hohen Schaltkomforts bei gleichzeitiger Sicherung gegen ein unzulässiges "Durchratschen" ist die Sperrverzahnung aller zur Synchronisiereinrichtung gehörigen Bauteile mit einem Sperrwinkel von 112° + 2° versehen. Dieser durch Versuche ermittelte Wert vermeidet ein "Durchratschen" vor Erreichen der Verschleißgrenze, ohne die Schaltbarkeit unzulässig zu erschweren.

Ein Ausführungsbeispiel, das zur weiteren Erläuterung der Erfindung beiträgt, ist aus den Zeichnungen sowie der anschließenden Figurenbeschreibung entnehmbar. Es zeigt:

Fig.1: die erfindungsgemäße Synchronisiereinrichtung im eingebauten Zustand,

Fig.2: den Kupplungsring in einer Vorderansicht,

Fig.3: vergrößert dargestellt den Schnitt A-A gemäß Fig.2,

Fig.4: die Schnittdarstellung B-B gemäß Fig.2,

Fig.5: die Ansicht D gemäß Fig.3,

Fig.6: die Ansicht E gemäß Fig.4,

Fig.7: das Detail H gemäß Fig.4,

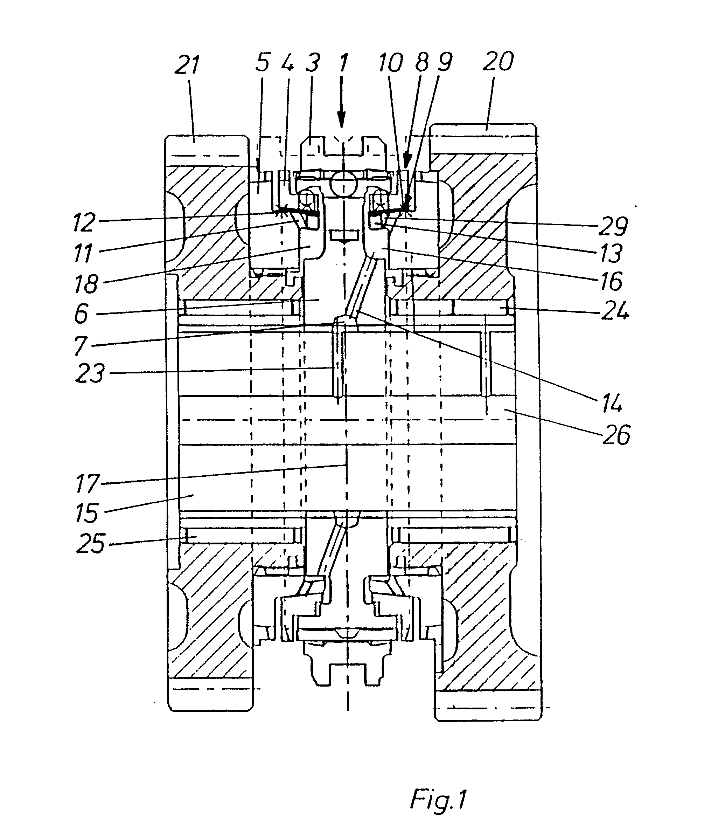

Der Aufbau der erfindungsgemäßen Synchronisiereinrichtung 1 im eingebauten Zustand ist in einer Schnittdarstellung der Fig.1 entnehmbar. Die Synchronisiereinrichtung 1 weist einen dreh- und schiebefest auf der Getriebewelle 15 befestigten Schaltmuffenträger 6 auf, dem seitlich je ein Gleichlaufring 4 und Kupplungsring 5 zugeordnet sind, die auf dem Außenumfang mit einer übereinstimmenden Sperrverzahnung 8 versehen sind. Eine Drehzahlsynchronisierung zwischen dem mit der Drehzahl der Getriebewelle 15 umlaufenden Schaltmuffenträgers 6 und dem seitlich neben der Synchronisiereinrichtung 1 befindlichen Zahnräder 20 und 21, welche über je ein Lager 24, 25 auf der Getriebewelle 15 angeordnet sind, wird erreicht durch ein Axialverschieben der Schaltmuffe 3 in Richtung eines der Zahnräder 20, 21. Zunächst kommt es dabei zu einem Gleichlauf zwischen dem Schaltmuffenträger 6 und den Gleichlaufring 4, welcher sich danach auf den Kupplungsring 5 überträgt durch Erzeugen eines Reibungsmomentes, über den einen Kegelsitz 9 bildenden Flächen am Gleichlaufring 4 und am Kupplungsring 5. Solange das Reibungsmoment vorhanden ist, kommt es nicht zum Einrücken der Schaltmuffe 3 in die Sperrverzahnung 8 des Kupplungsrings 5. Bei Gleichlauf zwischen dem Zahnrad und der Synchronisiereinrichtung verschwindet das Reibungsmoment und die Schaltmuffe 3 kann durchgeschaltet werden.

Zur Kühlung und Schmierung der Synchronisiereinrichtung wird ein Schmiermittel durch eine in der Getriebewelle 15 eingebrachte Längsbohrung 26 über eine dazu rechtwinklig im Bereich der Mittenachse 17 des Schaltmuffenträgers 6 angeordnete Stichbohrung 23 in eine Ringnut 7 geleitet, die sich im Schaltmuffenträger 6 befindet. Wechselseitig im Schaltmuffenträger 6 eingebrachte Zuführbohrungen 14 verbinden die Ringnut 7 mit dem Ringraum 16, welcher durch taschenförmige Ausnehmungen am Schaltmuffenträger 6 gebildet wird. In den Ringraum 16 ragend sind Teile vom Gleichlaufring 4 vom Kupplungsring 5 eingebracht, wobei die Schulter 29 des Kupplungsrings 5 mit der Bohrung 11 versehen ist, welche in der gleichen Winkellage zur Zuführbohrung 14 angeordnet ist und als eine Verlängerung dazu angesehen werden kann. Die Bohrung 11 mündet im Bereich des Kegelsitzes 9, -der durch die über eine Kegelfläche aufeinander drehbar gelagerten Bauteile, dem Gleichlaufring 4 und dem Kupplungsring 5 gebildet wird- in eine Schmieröltasche 12, die zur besseren Verteilung des Schmiermittels im Kegelsitz 9 dient. Die Schmieröltasche 12, eingebracht im Kupplungsring 5, erstreckt sich über die gesamte axiale Breite des Kegelsitzes 9. Auf der zum Ringraum 16, 18 zeigenden Seite vom Kupplungsring 5 sind ebenfalls zur Kühlung bzw. Schmierung des Kegelsitzes 9 Ausnehmungen 13 vorgesehen in Form von vertikal angeordneten, nahezu halbrundförmigen Aussparungen. Eine Erhöhung der Standzeit wird weiter erreicht durch das Aufbringen eines Reibbelages 10, z. B. in Form einer Streusinterfolie.

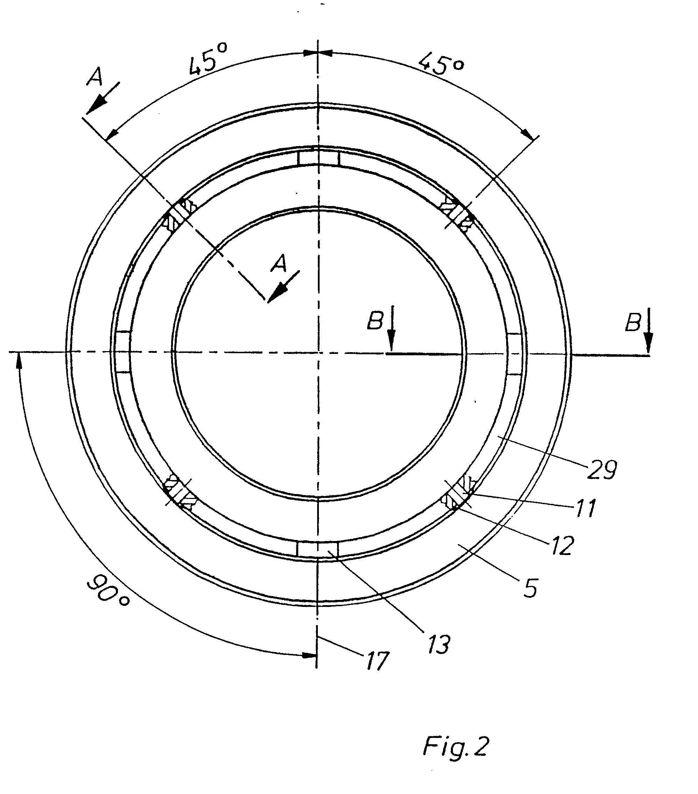

In einer Einzelteilzeichnung zeigt die Fig.2 die Vorderansicht des Kupplungsrings 5, aus der die symmetrische Verteilung von vier im Abstand von je 90° in die Schulter 29 des Kupplungsrings 5 eingebrachten Bohrungen sowie die im Abstand von 45° zu den Bohrungen eingebrachten Ausnehmungen 13 ersichtlich sind. Durch die örtlich im Schnitt dargestellten Bohrungen 11 ist weiter der Verlauf der Schmieröltasche 12 dargestellt, die sich in dieser Ansicht ausgehend von den Ausnehmungen 13 verjüngt.

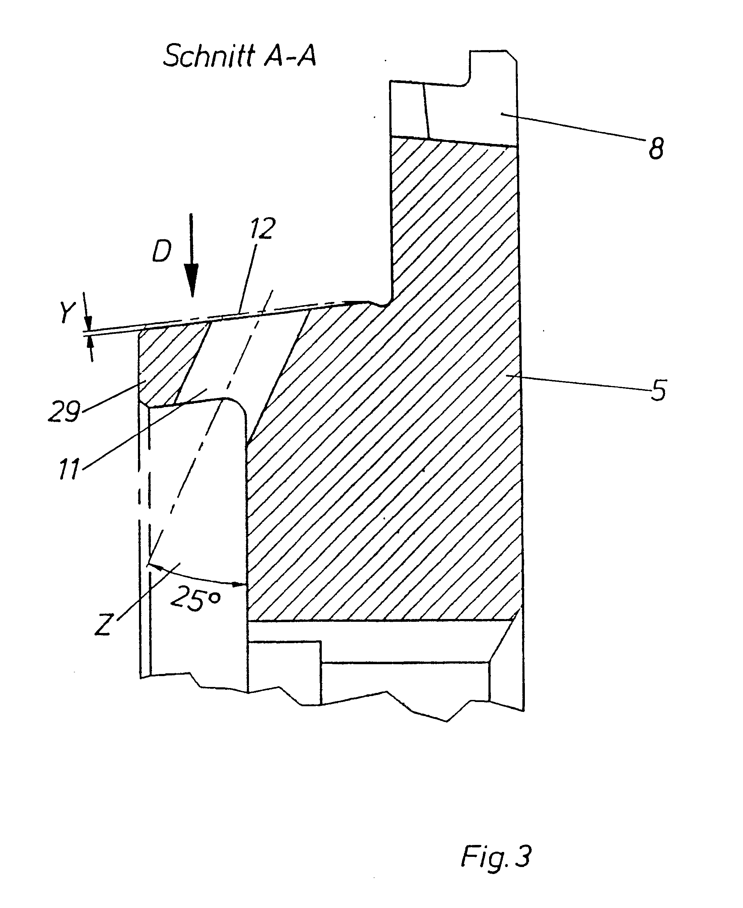

In einer vergrößerten Schnittdarstellung, Schnitt A-A (s. Fig.2) zeigt Fig.3 einen Ausschnitt des Kupplungsrings 5, aus dem insbesondere die Anordnung der Bohrung 11 ersichtlich ist, die im wesentlichen in der Schulter 29 unter einem Winkel (Z) von 25° zur senkrechten Achse eingebracht ist. Durch die Schnittdarstellung wird die Mündung der Bohrung 11 im mittleren Bereich der Längserstrek- kung der Schmieröltasche 12 deutlich, wie auch die über die gesamte axiale Erstreckung der Schmieröltasche gleich bleibende Tiefe (y).

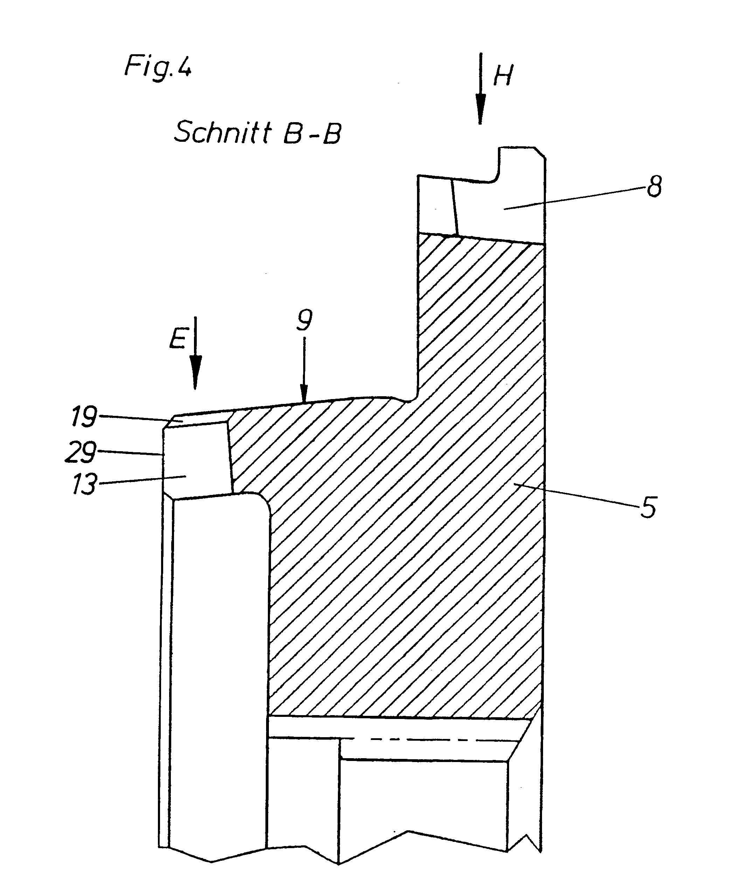

In einer um 45° zur Fig.3 dargestellten, ebenfalls vergrößerten Schnittdarstellung (Schnitt B-B, Fig.2) vom Kupplungsring 5 zeigt die Fig.4 die Ausgestaltung der Ausnehmung 13, die vertikal am Ende der Schulter 29 eingebracht ist, sowie die innerhalb der Ausnehmung 13 am Übergang zum Kegelsitz 9 angebrachte Phase 19.

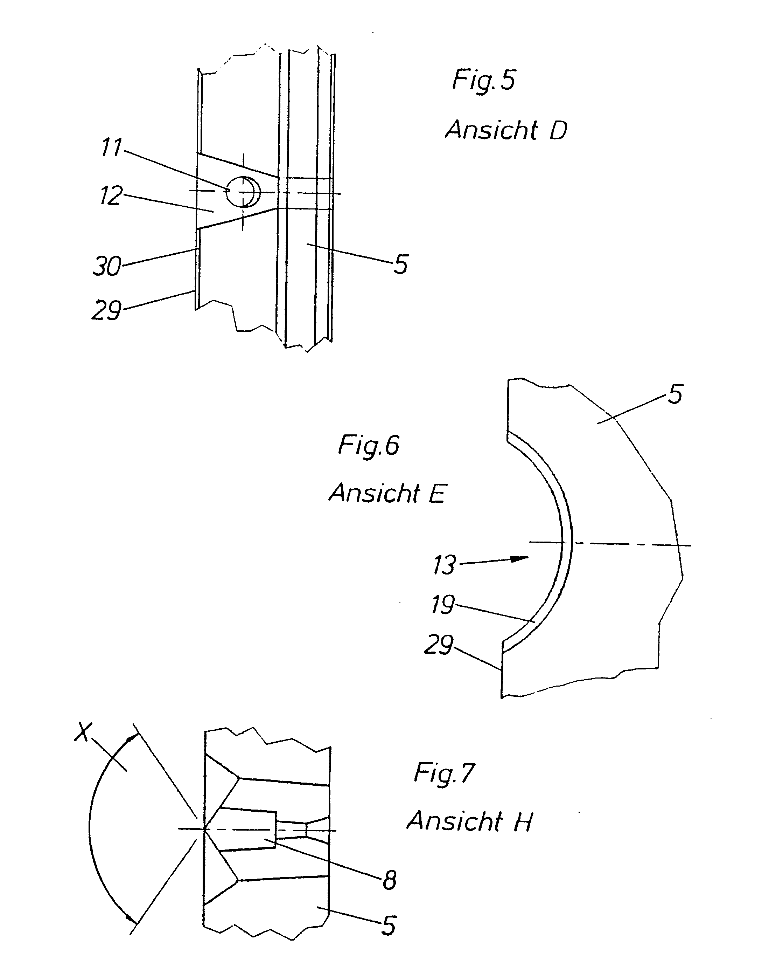

Durch Detailansichten, entnommen aus den Fig.3 und 4, sind nachfolgend erfindungswesentliche Ausgestaltungen zur Verdeutlichung der Erfindung in den Fig.5 bis 7 dargestellt.

Fig.5 zeigt die in einer Trapezform gestaltete Schmieröltasche 12, die ausgehend von der Phase 30 sich in der Breite gleichmäßig verjüngt, sowie die in der Mitte der Schmieröltasche 12 mündende Bohrung 11. Die Fig.6 zeigt gemäß Ansicht E aus Fig.4 die runde Gestaltung der Ausnehmung 13. In einer Draufsicht gemäß der Ansicht H (s. Fig.4) wird in Fig.7 ein Segment der Sperrverzahnung 8 am Kupplungsring 5 dargestellt, deren Sperrwinkel (x) 112° betrifft.

**Patentansprüche**

1. Synchronisiereinrichtung, insbesondere für formschlüssige Schaltkupplungen von Zahnradwechselgetrieben mit einem auf der Getriebwelle dreh- und schiebefest angeordneten Schaltmuffenträger, dem seitlich zumindest ein drehbarer Gleichlauf- und Kupplungsring zugeordnet sind, die zueinander über einen Kegelsitz drehbar sind, und die Synchronisiereinrichtung durch eine Bohrung mit dem Schmier- und Kühlmittelkreislauf des Zahnradwechselgetriebes in Verbindung steht, dadurch gekennzeichnet, daß im Kegelsitz (9) der Kupplungsring (5) eine Schmieröltasche (12) aufweist, in die die Bohrung (11) mündet und die Schmieröltasche (12) sich örtlich über die axiale Breite des Kegelsitzes (9) erstreckt und eine Ausnehmung darstellt.

2. Synchronisiereinrichtung nach Anspruch 1, dadurch gekennzeichnet, daß die Schmieröltasche (12) sich ausgehend vom Schaltmuffenträger (6) im Kegelsitz (9) mit zunehmender Entfernung verjüngt und in der Draufsicht einem Trapez gleicht.

3. Synchronisiereinrichtung nach Anspruch 1 und Anspruch 2, dadurch gekennzeichnet, daß die Schmieröltasche (12) als eine zur Außenkontur des Kupplungsringes (5) im Bereich des Kegelsitzes (9) durchgehend parallele Ausnehmung gebildet ist.

4. Synchronisiereinrichtung nach einem der vorhergehenden Ansprüche, dadurch gekennzeichnet, daß die Schmieröltasche (12) durch eine Ausnehmung dargestellt ist, die zur Außenkontur des Kupplungsringes (5) im Kegelsitzbereich geneigt verläuft.

5. Synchronisiereinrichtung nach einem der vorhergehenden Ansprüche, dadurch gekennzeichnet, daß die Schmieröltasche (12) ein Breitenverhältnis zwischen der zum Schaltmuffenträger (6) gerichteten Grundlinie und der dazu parallel verlaufenden weiteren Grundlinie von 2,5 : 1 aufweist.

6. Synchronisiereinrichtung nach einem der vorhergehenden Ansprüche,
dadurch gekennzeichnet, daß die Bohrung (11) als Schrägbohrung im Kupplungsring (5) eingebracht ist, deren Winkellage mit der einer Zuführbohrung (14) im Schaltmuffenträger (6) übereinstimmt, wobei die Zuführbohrung (14) mit einer Ringnut (7) mittig im Schaltmuffenträger (6) auf einer Getriebewelle (15) in Verbindung steht.

7. Synchronisiereinrichtung nach einem der vorhergehenden Ansprüche,
dadurch gekennzeichnet, daß die Bohrung (11) sowie die Zuführbohrung (14) symmetrisch im Kupplungsring (5) bzw. im Schaltmuffenträger (6) im jeweiligen Abstand von 90° zueinander angeordnet sind.

8. Synchronisiereinrichtung nach einem der vorhergehenden Ansprüche,
dadurch gekennzeichnet, daß die Bohrung (11) und die Zuführbohrung (14) in einem Neigungswinkel von 25° zur Mittenachse (17) des Schaltmuffenträgers (6) verlaufen.

9. Synchronisiereinrichtung nach einem der vorhergehenden Ansprüche,
dadurch gekennzeichnet, daß die Anzahl der Bohrungen (11) zu denen der Zuführbohrungen (14) zueinander abweichend ist.

10. Synchronisiereinrichtung nach einem der vorhergehenden Ansprüche,
dadurch gekennzeichnet, daß mit einem Versatz von jeweils 45° zu den Bohrungen (11) auf der zum Schaltmuffenträger (6) gerichteten Seite des Kupplungsringes (5) am Ende des Kegelsitzes (9) offene Ausnehmungen (13) vorgesehen sind.

11. Synchronisiereinrichtung, die im Kegelsitz einen Reibbelag aufweist nach einem der vorhergehenden Ansprüche, dadurch gekennzeichnet, daß als Reibbelag (10) ein Streusinterbelag dient in Form einer Folie, die einflächig aufgetragen ist.

12. Synchronisiereinrichtung, versehen mit einer zwangsweisen Sperrwirkung nach einem der vorhergehenden Ansprüche,
dadurch gekennzeichnet, daß die Sperrverzahnung (8) einen Sperrwinkel (x) von 112 + 2° aufweist.

*Fig.1*

*Fig. 2*

Schnitt A-A

Fig. 3

Fig.4

Schnitt B-B

H

8

9

E

19

29

13

5

Fig.5

Ansicht D

Fig.6

Ansicht E

Fig.7

Ansicht H

Europäisches
Patentamt

**EUROPÄISCHER
RECHERCHENBERICHT**

Nummer der Anmeldung

**EP 91 10 8746**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y,A | EP-A-0 063 227  (K.H.D.)<br>* das ganze Dokument *<br>– – – | 1,2,4,6,8,<br>10 | F 16 D 23/06<br>F 16 D 23/04 |
| Y | PATENT ABSTRACTS OF JAPAN vol. 13, no. 360<br>(M-858)(3708) 11. August 1989<br>& JP-A-1 120 430 (MAZDA ) 12. Mai 1989<br>* das ganze Dokument *<br>– – – | 1,2,4 | |
| A | FR-A-1 460 313  (Z.F.)<br>* das ganze Dokument *<br>– – – – – | 12 | |

| RECHERCHIERTE SACHGEBIETE (Int. Cl.5) |
|---|
| F 16 D |

Der vorliegende Recherchenbericht wurde für alle Patentansprüche erstellt

| Recherchenort | Abschlußdatum der Recherche | Prüfer |
|---|---|---|
| Den Haag | 10 September 91 | BALDWIN D.R. |